# EUROPEAN PATENT APPLICATION

(11) **EP 3 246 469 A1**
(43) Date of publication of application: **22.11.2017**
(21) Application number: 17386002.4
(22) Date of filing: 02.02.2017
(51) Int. Cl.: E01H 1/12

(54) **APPARATUS FOR COLLECTING FAECES**

(30) Priority: 23.03.2016 GR 20160100114
(71) Applicant: Giallourakis, Georgios-Hans, 15669 Papagou, Athens (GR); Giallouraki, Alkmini-Nelly, 15669 Papagou, Athens (GR)
(72) Inventor: Giallourakis, Georgios-Hans, 15669 Papagou, Athens (GR); Giallouraki, Alkmini-Nelly, 15669 Papagou, Athens (GR)
(74) Representative: Papaconstantinou, Helen

(57) **Abstract**

An apparatus for collecting faeces characterized in that it consists of a collection container that can be used one-handed and comprises two jaws (1, 2) connected together at one end on an elastic flexible connection side (3) of the jaws (1, 2) with a rotation axis (22), which resists the closing of the jaws (1, 2), which form a hollow space when close, wherein the circumferential L-shaped edge (5) of the one jaw (2) is smaller than the circumferential L-shaped edge (4) of the other jaw (1), so that the edge of the one jaw (2) fits exactly into the edge of the other jaw (1) when the collection container closes against the reversion resistance of the elastic flexible connection side (3), and they lock in both sides with locking elements located circumferentially and to the ends of the jaws (1, 2), not being able to open again, and wherein, approximately at the centre of its main surface, each jaw (1, 2) includes a prismatic protrusion (8) whose top tip (71, 72) is parallel to the rotation axis (22) of the jaws (1, 2).

## Description

The dominant practice for collecting faeces is the use of a plastic bag. The plastic bag is used either manually or fitted on grabbers of various types. In this procedure, the user must use both hands without having total control of the pet. After the collection of the faeces, the bag is discarded in the garbage bin. In manual use of the bag, the user feels the texture and temperature of the faeces. If the faeces are not entirely solid, they are very difficult to collect since they leak out during handling of the bag. The bag, which is placed into a grabber, should have the opening turned back on itself so that the user does not get dirty when he/she removes it for disposal. It should be noted that the bag used should not have holes because the faeces will leak onto user's hand or on the grabber.

Another way of collecting is by means of a scoop and a small brush, but it should be cleaned after every use. The same applies to the grabbers that do not use a bag.

The present invention aims to introduce an apparatus for collecting faeces, which can be used one-handed, allowing the user to keep control of the pet with the other hand while collecting the faeces. In the context of the present invention, a collection container ready for use without any partial assembly is shown. By means of the collection container, the user does not come into direct or indirect contact with the texture and temperature of the faeces and can collect them even when they are slightly dispersed. The collection container can be used even for collecting solid or nearly solid faeces, dead small rodents, or similar objects which the user would not want to come into direct or indirect contact with.

Furthermore, a special grabber is shown in which the collection container is fitted and which enables the user to collect the faeces from an almost upright position. After use with or without a grabber, the collection container closes and locks entrapping the faeces, and hence the user can carry the container to the disposal point.

The apparatus for collecting faeces comprises the collection container and optionally includes the special grabber for handling the collection container. The collection container is disposable and produced from inexpensive materials such as plastic, paper or other biodegradable material. The collection container is ready for use, and no partial assembly is required.

The present invention may be fully understood from the following detailed description in connection with the appended drawings, in which:
Figure 1 shows a perspective view of the collection container in an open resting position.
Figure 2 shows a side view of the collection container in a closed position.
Figure 3 shows a sectional view of the special handling grabber.
Figure 4 shows a sectional view of the handle of the special handling grabber.
Figure 5 shows a sectional view of the handling grabber with the collection container attached to it in an open position.
Figure 6 shows a sectional view of the handling grabber with the collection container attached to it in a closed position.
Figure 7 shows a perspective view of the collection container as it is correctly handled by the user in an open position, and
Figure 8 shows a perspective view of collection containers in a stacked position.

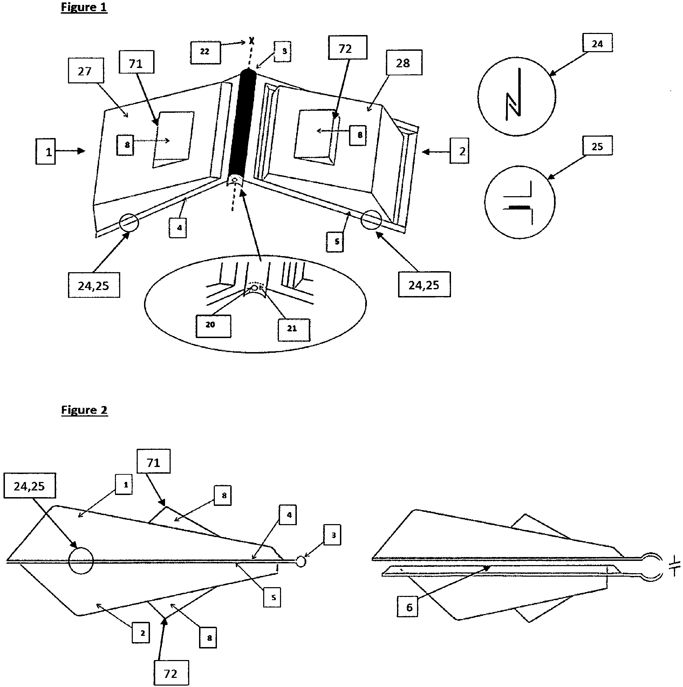

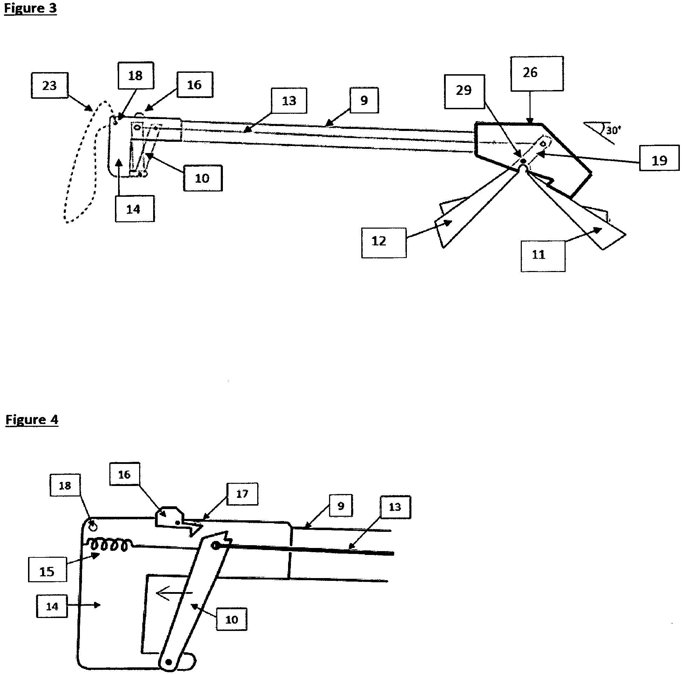

The collection container (Figure 1) is disposable and can be used one handed. The collection container (Figure 1) may alternatively collect faeces once fitted to the special handling grabber (Figure 3).

The collection container (Figure 1) is made of flexible plastic or hard paper or other biodegradable material. The collection container (Figure 1) is an integral unit and comprises two jaws (1, 2) which at one end are connected together on a resilient flexible connection side (3) of the jaws (1, 2) with a rotation axis (22). The resilient flexible connection side (3) of the jaws (1, 2) is made of a resilient flexible material, e.g. plastic, so that when someone tries to close the two jaws (1, 2), it resists the closing movement as a return spring with a tendency to revert to the initial resting position (Figure 1).

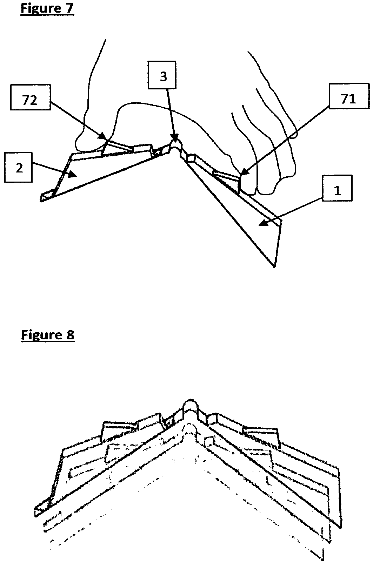

This reversion resistance allows handling one-handed since it prevents the jaws (1, 2) from slipping through the user's hand due to the friction developed by the resistance (Figure 7). The resilient flexible connection side (3) of the jaws (1, 2) may be a plastic or metallic foil.

According to the invention, when the two jaws (1, 2) rotate about the rotation axis (22) and be pressed against one another, a closed container is formed (Figure 2), into which the faeces are retained. The two arms of the jaws (1, 2) are slightly bent towards the closing side of the collection container resembling the thumb and the fingers of the hand which move to grip an object.

The circumference and the ends of the jaws (1, 2) are configured in the shape of L (4, 5) (Figure 1) so as to impart hardness to the outer circumferential surfaces. The L-shaped circumferential edge (5) of the one jaw (2) is slightly smaller than the L-shaped circumferential edge (4) of the other jaw (1), so that the edge of the one jaw (2) fits precisely into the edge of the other jaw (1) - as shown in (6) - when the container closes against the reverting resistance (Figure 2), and they lock on both sides with locking elements located circumferentially and to the ends of the jaws (1, 2) as shown in (24) or (25), not being able to open again. The lockup (24) is accomplished by two reverse hooks formed on the edges (4, 5), and alternatively (25) with an adhesive strip on one edge (4 or 5) which may be protected by a release liner. After the jaws (1, 2) shut, the collection container (Figure 2) is now a closed hollow container which contains the faeces. Then, the user discards the collection container (Figure 2) in the garbage bin.

Onto the outer surfaces (27, 28) of each jaw (1, 2) and approximately at their centre, there are prismatic protrusions (8, 8) whose top tips (71, 72) are parallel to the rotation axis (22). The user grips the one jaw (2) from the tip (72) with the thumb and the other jaw (1) from the symmetrically corresponding tip (71) with the remaining fingers. This way, he/she holds and handles the container without it slipping (Figure 7) from the hand, since the resilient flexible connection side (3) resists the pressure of the fingers.

By handling the collection container (Figure 7), the user collects even the slightly dispersed faeces and entraps them into the collection container (Figure 2) which closes by convergence of the fingers on the top tips (71, 72) of the two jaws (1, 2) until one jaw fits into the other (Figure 2).
The geometry of the collection container (Figure 1) is slightly deviating from the vertical on its lateral surfaces so that collection containers can be placed on each other for stacking purposes with the least increase in volume (Figure 8). Also, the collection container (Figure 1) may have a special hole (20) where a carrying ring can be fitted, in which more than one collection containers can be mounted (Figure 8). Also, there may be a tear perforation (21) so that the collection container detaches easily (Figure 1) from the carrying ring.

The jaws (1, 2) of the collection container (Figure 1) can schematically resemble sea shells.

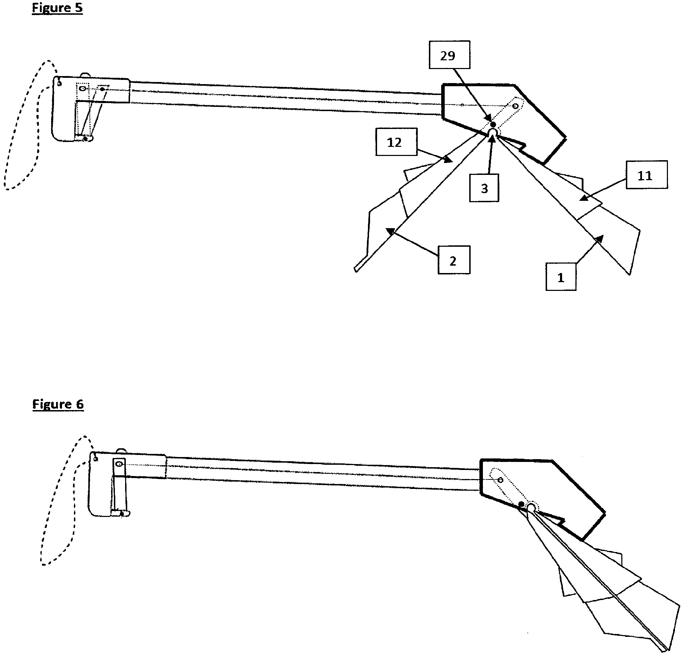

According to the present invention, the user may alternatively collect the faeces from an almost upright position with a special handling grabber (Figure 3) after he/she fits the collection container (Figure 1) on it (Figure 5).

The special handling grabber (Figure 3) consists of a hollow central rod (9), at one end of which there is a handle (Figure 4), while at the other end a component (26) is attached on which two jaws are connected (11, 12), and the collection container is accommodated inside them. The one jaw (11) is fixedly attached to the component (26) and preferably at an angle of about 30 degrees relative to the axis of the central rod (9) so that, in use, the jaw (11) is approximately perpendicular to the ground. The other jaw (12) is hinged to the component (26). For the rotation of this jaw (12) between an open and a closed position, an arm (19) extending past the hinge and into the component (26) has a hole at the end where a cable (13) is attached. The cable passes through the hollow central rod (9) and ends up to the handle of the special handling grabber (Figure 4) where it is attached to a trigger (10).

Between the handle (14) and the trigger (10), there is a return spring (15). In the closing position of the trigger (10), a locking/unlocking mechanism (16) supported by the handle (14) prevents the release of the trigger (10). The locking/unlocking mechanism (16) has a return spring (17). By pressing the locking/unlocking mechanism (16), the trigger is released (10).

On the handle (14), there may be a slot (18) for a carrying strap (23) with a variable length.

The jaws (11, 12) of the handling grabber are schematically identical, but slightly wider than the jaws (1, 2) of the collection container (Figure 1), so that the collection container fits exactly and is retained inside the special handling grabber (Figure 5). The jaws (11, 12) of the handling grabber are smaller at their free lower end than the jaws (1, 2) of the collection container so that it is impossible for their lower ends to come into contact with the ground or the faeces when the special handling grabber closes (Figure 6). The rotational axis (29) of the hinged jaw (12) is just above the elastic flexible connection side (3) of the collection container (Figure 1) when it is attached to the special handling grabber (Figure 3).

When the two jaws (1, 2) of the collection container fasten to the jaws (11, 12) of the grabber, they can open and close together with the jaws (11, 12) of the grabber before the locking point. Past this point, the jaws (1, 2) of the collection container lock and then the grabber is able to open the jaws (11, 12) and reject the container.

When the trigger (10) is pressed, the hinged jaw (12) of the handling grabber is rotated by the cable converging towards the fixed jaw (11). In this position, that is with the jaws (11, 12) of the grabber closed, the trigger (10) locks with the locking/unlocking mechanism (16) and prevents the opening of the jaws (11, 12) of the special handling grabber (Figure 6). Next, the locking/unlocking mechanism (16) must be pressed in order to release the jaws (11, 12).

The collection container (Figure 1) is placed inside the special handling grabber (Figure 3) while in the open position, and clasps on it with slight pressure (Figure 5). In this position, the special handling grabber and the collection container function as a single apparatus (Figure 5) ready to collect faeces.

By using the special handling grabber (Figure 5), the user collects the faeces and by pressing the trigger (10) entraps them into the collection container which closes (Figure 6) and the locking/unlocking mechanism (16) blocks the trigger (10). This closing movement simultaneously locks the collection container in either of the two ways mentioned above (24 or 25).

When the user is ready to discard the collection container, he/she unlocks the trigger (10) by pressing the locking/unlocking mechanism (16) and thus the jaws (11, 12) of the special handling grabber resume the open position (Figure 3) by means of the return spring (15) and no longer retain the closed collection container (Figure 2), which is discarded. In this position, the grabber (Figure 3) is ready to receive a new collection container (Figure 1).

## Claims

1. An apparatus for collecting faeces **characterized in that** it consists of a collection container that can be used one-handed and comprises two jaws (1, 2) connected together at one end on an elastic flexible connection side (3) of the jaws (1, 2) with a rotation axis (22), which resists the closing of the jaws (1, 2), which form a hollow space when close, wherein the circumferential L-shaped edge (5) of the one jaw (2) is smaller than the circumferential L-shaped edge (4) of the other jaw (1), wherein the edge of the one jaw (2) fits exactly into the edge of the other jaw (1) when the collection container closes against the reversion resistance of the elastic flexible connection side (3), and they lock in both sides with locking elements located circumferentially and to the ends of the jaws (1, 2), not being able to open again, and wherein, approximately at the centre of its surface, each jaw (1, 2) includes a prismatic protrusion (8) whose top tip (7) is parallel to the rotation axis (22) of the jaws (1, 2).

2. Apparatus for collecting faeces according to claim 1, **characterized in that** the locking is accomplished by two reverse hooks (24) formed on the edges (4, 5) of the jaws (1, 2) or alternatively with an adhesive strip (25) on one edge (4, 5) of one jaw (1, 2).

3. Apparatus for collecting faeces according to claim 1 or 2, **characterized in that** the collection container is made of flexible plastic or hard paper or other biodegradable material.

4. Apparatus for collecting faeces according to claim 1, 2 or 3, **characterized in that** the elastic flexible connection side (3) that connects the two jaws (1, 2) and resists the closing of the jaws (1, 2) is made of elastic flexible material and connected with the jaws (1, 2).

5. Apparatus for collecting faeces according to claim 4, **characterized in that** the elastic flexible connection side (3) of the jaws (1, 2) is a plastic or metallic foil.

6. Apparatus for collecting faeces according to claim 1, 2, 3, 4 or 5, **characterized in that** the geometry of the collection container deviates from the vertical on its lateral surfaces so that a collection container can be placed on top of another one for stacking purposes with the least increase in volume.

7. Apparatus for collecting faeces according to claim 1, 2, 3, 4, 5 or 6, **characterized in that** it includes a handling grabber in which a collection container is fitted and which allows the user to collect the faeces from an almost upright position.

8. Apparatus for collecting faeces according to claim 7, **characterized in that** the handling grabber consists of a hollow central rod (9), at one end of which there is a handle (14), while at the other end a component (26) is attached on which two jaws (11, 12) are connected, and this is where the collection container is accommodated, wherein the one jaw (11) is firmly attached to the component (26) and the other jaw (12) is hinged to the component (26), wherein for the rotation of the hinged jaw (12), an arm (19) extending past the hinge and into the component (26) has a hole at the end where a cable (13) is attached, the cable passes through the hollow central rod (9) and ends up to the handle of the special handling grabber where it is attached to a trigger (10).

9. Apparatus for collecting faeces according to claim 8, **characterized in that** the jaws (11, 12) of the handling grabber are schematically identical, but wider than the jaws (1, 2) of the collection container, so that the collection container fits exactly and is retained inside the special handling grabber, **in that** the jaws (11, 12) of the handling grabber are smaller at their free lower end than the jaws (1, 2) of the collection container so that it is impossible for their lower ends to come into contact with the ground or faeces when the special handling grabber closes, **in that** the rotation axis (29) of the hinged jaw (12) is just above the elastic flexible connection side (3) of the collection container when it is attached to the special handling grabber, and **in that** when the two jaws (1, 2) of the collection container fasten to the jaws (11, 12) of the grabber, they can open and close with the jaws (11, 12) of the grabber before the locking point, past which point, the jaws (1, 2) of the collection container lock and then the grabber is able to open the jaws (11, 12) and reject the container.

10. Apparatus for collecting faeces according to claim 8 or 9, **characterized in that** between the handle (14) and the trigger (10) there is a return spring (15), **in that** in the closing position of the trigger (10) there is a locking/unlocking mechanism (16) which is supported by the handle (14) and prevents the release of the trigger (10), wherein the locking/unlocking mechanism (16) has a return spring (17) and when pressed, it releases the trigger (10), and
**in that** when the trigger (10) is pressed, the hinged jaw (12) of the handling grabber is rotated by the cable (13) converging towards the fixed jaw (11), where in this position, the trigger (10) locks with the locking/unlocking mechanism (16) and prevents the opening of the jaws (11, 12) of the special handling grabber in order to open the jaws, the locking/unlocking mechanism (16) is required to be pressed.

11. Apparatus for collecting faeces according to claim 8, 9 or 10, **characterized in that** when the trigger (10) is released by pressing the locking/unlocking mechanism (16), the jaws (11, 12) of the special handling grabber resume the open position by means of the return spring (15) and no longer retain the closed collection container, which is discarded, and in this position, the grabber is ready to receive a new collection container.

12. Apparatus for collecting faeces according to claim 7, 8, 9, 10 or 11, **characterized in that** the one jaw (11) is fixedly attached to the component (26) at an angle of about 30 degrees relative to the axis of the central rod (9) so that, in use, the jaw (11) is approximately perpendicular to the ground.

13. Apparatus for collecting faeces according to claim 7, 8, 9, 10 or 11, **characterized in that** there is a slot (18) on the handle (14) for a carrying strap (23) with a variable length.
